# EUROPÄISCHE PATENTSCHRIFT

(11) **EP 1 169 132 B1**
(45) Veröffentlichungstag und Bekanntmachung des Hinweises auf die Patenterteilung: **02.05.2003**
(21) Anmeldenummer: 00905033.7
(22) Anmeldetag: 07.02.2000
(51) Int. Cl.: B05B 7/14

(54) **NIVEAUSONDE FÜR PULVERBEHÄLTER**
LEVEL PROBE FOR POWDER CONTAINER
SONDE DE NIVEAU POUR RECIPIENT A POUDRE

(30) Priorität: 25.03.1999 DE 19913448
(43) Veröffentlichungstag der Anmeldung: 09.01.2002
(73) Patentinhaber: ITW Gema AG, 9015 St. Gallen (CH)
(72) Erfinder: RUTZ, Guido, CH-9200 Gossau (CH); MICHAEL, Hans, Peter, CH-9015 St. Gallen (CH)
(74) Vertreter: Vetter, Ewald Otto
(86) Internationale Anmeldenummer: EP0000950
(87) Internationale Veröffentlichungsnummer: WO00058015

(56) Entgegenhaltungen:
- EP-A- 0 578 332
- US-A- 3 650 436
- US-A- 4 812 086
- US-A- 5 294 217

## Beschreibung

Die Erfindung betrifft eine Pulverbehälter-Niveausondenvorrichtung für eine Pulver-Sprühbeschichtungseinrichtung gemäß dem Oberbegriff von Anspruch 1.

Eine solche Pulverbehälter-Niveau sonden vorrichtung ist aus der US 4 812 086 A bekannt.

Liste des weiteren Standes der Technik:
EP 0 185 479 B1
EP 0 452 635 B1
DE 198 08 765 A1
DE 196 11 533 A1
DE 39 05 236 A1

Aus der EP 0 185 479 B1 ist eine Pulver-Sprühbeschichtungseinrichtung zum Sprühbeschichten von Objekten mit pulverförmigem Beschichtungsmaterial bekannt, bei welcher eine erste Pumpe Beschichtungspulver aus einem ersten Pulverbehälter in einen zweiten Pulverbehälter pneumatisch fördert, und eine zweite Pumpe das Pulver aus dem zweiten Pulverbehälter zu einer Sprühvorrichtung fördert. Im zweiten Pulverbehälter wird das Pulverniveau durch eine Pulver-überlaufvorrichtung konstant gehalten, welches Überschußpulver in den ersten Pulverbehälter zurückleitet.

Beide Pulverbehälter enthalten einen perforierten Zwischenboden, durch welche Fluidisier-Druckluft von unten nach oben in das auf dem Zwischenboden vorhandene Pulver strömt und dieses Pulver "fluidisiert", d.h. die Pulverpartikel in der Fluidisier-Druckluft in einem Schwebezustand hält.

Aus der EP 0 452 635 ist eine pneumatische Fluidisier- und Absaugeinheit bekannt, welche in einen Pulverbehälter eintauchbar ist, um darin Pulver zu fluidisieren und das fluidisierte Pulver aus dem Behälter abzusaugen und zu einer Sprühvorrichtung oder zu einem anderen Gerät zu fördern. Die Fludisier- und Absaugeinheit ist mit einem Niveausensor versehen, welcher in Abhängigkeit von seiner Eintauchtiefe in das fluidisierte Pulver ein elektrisches Signal erzeugt. Das elektrische Signal steuert eine Vorschubeinrichtung, durch welche die Fluidisier- und Absaugeinheit zusammen mit dem Niveausensor stets auf gleicher Eintauchtiefe in dem fluidisierten Pulver gehalten wird und bei abnehmender Pulvermenge dem absinkenden Pulverniveau automatisch nachgeführt wird. Dadurch herrschen an dem unteren, pulverabsaugenden Ende eines Absaugrohres der Fluidisier- und Absaugeinheit unabhängig von der Pulverhöhe im Pulverbehälter stets eine gleiche Pulverkonzentration und gleiche Pulver-Luft-Strömungsverhältnisse. Dadurch wird eine gleichförmige Pulverförderung zu einer Sprühvorrichtung gewährleistet.

Aus der Praxis ist es bekannt, als Niveausensor sogenannte kapazitive Sensoren zu verwenden, deren Kapazität sich in Abhängigkeit von der Pulverkonzentration im Bereich des Sensors ändert. Ein wesentlicher Nachteil ist jedoch, daß das Meßergebnis verfälscht wird durch Pulverpartikel, welche sich an dem Sensor im Laufe der Zeit ansammeln und an ihm haften bleiben.

Durch die Erfindung soll die Aufgabe gelöst werden, eine Pulverbehälter-Niveausondenvorrichtung für eine Pulver-Sprühbeschichtungseinrichtung derart auszubilden, daß sie unabhängig von gegebenenfalls an ihr haftenden Pulverpartikeln dauerhaft exakt funktioniert und wartungsfrei ist. Vorzugsweise sollte sie derart ausgebildet werden können, daß sie nicht nur vertikal, sondern in jeder beliebigen Lage, beispielsweise auch in einer horizontalen Lage, zu Detektion des Pulverniveaus in einem Pulverbehälter verwendet werden kann.

Unter dem Begriff "Pulverbehälter" wird hier nicht nur ein "steifer" Behälter verstanden, sondern es kann auch ein "flexibler" Behälter wie beispielsweise ein Sack aus Plastikfolie oder aus einem anderen Material sein.

Diese Aufgabe wird gemäß der Erfindung gelöst durch einen induktiven Näherungssensor, eine gegenüber dem Näherungssensor angeordnete Membran, welche durch Druck von fluidisiertem Pulver auf ihrer vom Näherungssensor abgewandten Außenseite relativ zum Näherungssensor in Richtung zum Näherungssensor hin und her bewegbar ist, und ein auf der dem Näherungssensor gegenüberliegenden Innenseite der Membran angeordnetes, mit ihr zur gemeinsamen Bewegung verbundenes Metallelement aus einem die magnetischen Eigenschaften des Näherungssensors beeinflussenden Metall.

Die Erfindung ergibt insbesondere folgende Vorteile: sie liefert dauerhaft exakte Meßsignale unabhängig von gegebenenfalls an ihr anhaftenden Pulverpartikeln. Dadurch ist sie diesbezüglich auch wartungsfrei. Ferner kann sie in jeder beliebigen Richtung, nicht nur vertikal, sondern beispielsweise auch horizontal zur Detektion des Pulverniveaus in einem Pulverbehälter verwendet werden. Sie kann aus wenigen handelsüblichen Teilen hergestellt werden und ist dadurch sowohl in der Herstellung als auch im Betrieb preiswert.

Weitere Merkmale der Erfindung sind in den Unteransprüchen enthalten.

Die Erfindung wird im folgenden mit Bezug auf die Zeichnungen anhand einer bevorzugten Ausführungsform und anhand von bevorzugten Verwendungen als Beispiele beschrieben. In den Zeichnungen zeigen
- Fig. 1: eine Seitenansicht, im unteren Endabschnitt im Axialschnitt, einer Pulverbehälter-Niveausondenvorrichtung nach der Erfindung,
- Fig. 2: den unteren Endabschnitt von Fig. 1 in einer gegenüber von Fig. 1 vergrößerten Darstellung,
- Fig.3: eine Pulver-Sprühbeschichtungseinrichtung mit Pulverbehälter-Niveausondenvorrichtungen nach Fig. 1.

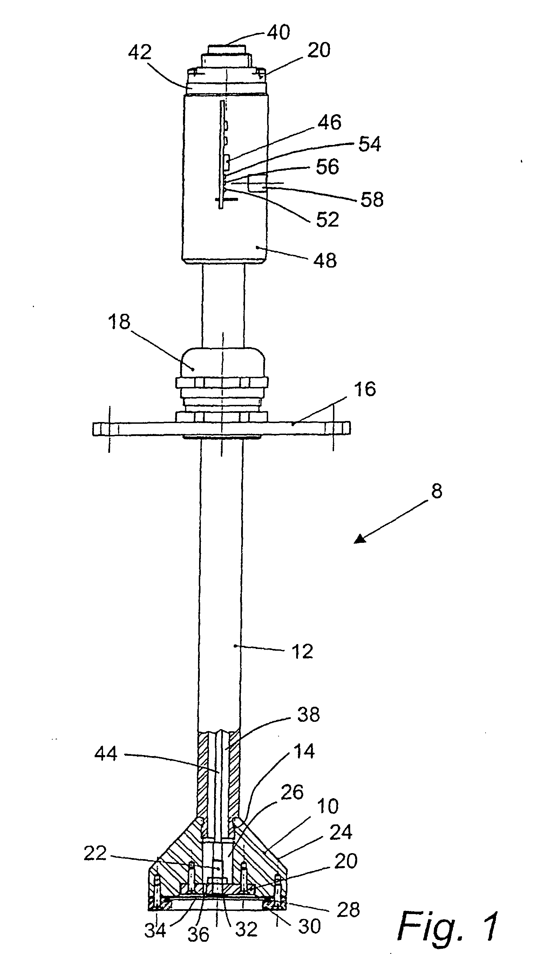

Die Pulverbehälter-Niveausondenvorrichtung 8 von Fig. 1 besteht im wesentlichen aus einem Sondenkopf 10; einem Rohr 12, an dessen einem Ende der Sondenkopf 10 durch eine Gewindeverbindung 14 angeschraubt ist; einem Träger 16 mit einer Durchgangsöffnung, durch welche sich das Rohr 12 hindurcherstreckt; einer Befestigungsvorrichtung 18 in Form eines Schnellverschlusses, beispielsweise in Form einer Stopfbüchse, welche an dem Träger 16 befestigt ist und durch welche sich das Rohr 12 hindurch erstreckt, so daß das Rohr 12 in Rohrlängsrichtung relativ zu dem Träger 16 verstelllbar ist und in jeder beliebigen Längsposition an dem Träger 16 unverschiebbar befestigbar ist.

Der Sondenkopf 10 enthält eine Fixierscheibe 20 mit einer zentralen Durchgangsöffnung, in welcher ein induktiver Näherungssensor 22 angeordnet ist, welcher an der Fixierscheibe 20 befestigt ist und axial zum Rohr 12 angeordnet ist. Die Fixierscheibe 20 ist an einem Kopfstück 24 befestigt, welches eine zum Rohr 12 axiale Durchgangsöffnung 26 hat, in welche der Näherungssensor 22 hineinragt.

Eine Membran 28 ist zwischen eine vom Rohr 12 abgewandte Stirnseite des Kopfstückes 24 und einen an das Kopfstück angeschraubten Haltering 30 eingespannt.

Auf der dem Näherungssensor 22 gegenüberliegenden Innenseite der Membran 28 ist ein Metallelement 32, vorzugsweise in Form einer Metallscheibe 32, axial zum Näherungssensor 22 angeordnet und an der Membran 28 befestigt, vorzugsweise angeklebt oder anvulkanisiert. Dadurch kann das Metallelement 32 zusammen mit der Membran 28 in Richtung zum Näherungssensor 22 Bewegungen vor und zurück machen, in Abhängigkeit von Drücken von fluidisiertem Pulver auf die Membranaußenseite 34, welche radial innerhalb des Halteringes 30 frei liegt und von fluidisiertem Pulver kontaktierbar ist. Die Membran 28 und ihr Metallelement 32 haben in einer Neutralstellung, in welcher kein Druck auf die Membranaußenseite 34 wirkt, mit Ausnahme des Atmosphärendruckes, axialen Abstand von dem Näherungssensor 22.

Das Metallelement 32 besteht aus einem Metall, vorzugsweise Eisen, welches in Abhängigkeit von seinem Abstand vom Näherungssensor 22 dessen magnetischen Eigenschaften, insbesondere Induktivität, verändert.

Damit axialen Bewegungen der Membran 28, hervorgerufen durch Druckänderungen auf der Membranaußenseite 34, kein Luftdruck auf der Membraninnenseite in unerwünschter Weise entgegenwirkt, ist der Zwischenraum zwischen der Membran 28 und der Fixierscheibe 20 entlüftet. Vorzugsweise ist dieser Zwischenraum durch mindestens eine achsparallele Bohrung 36 in der Fixierscheibe 20 mit dem Rohrkanal 38 in Strömungsverbindung, welch letzterer an dem vom Sondenkopf 10 abgewandten Rohrende 40 mit der Außenatmosphäre in Verbindung steht, beispielsweise durch einen Entlüftungsring 42.

Die Fixierscheibe 20 sollte aus elektrisch isolierendem Material bestehen, vorzugsweise Kunststoff, damit sie die Induktivität des Näherungssensors 22 nicht beeinflußt. Das Kopfstück 24 und das Rohr 12 können aus Metall oder aus Kunststoff bestehen.

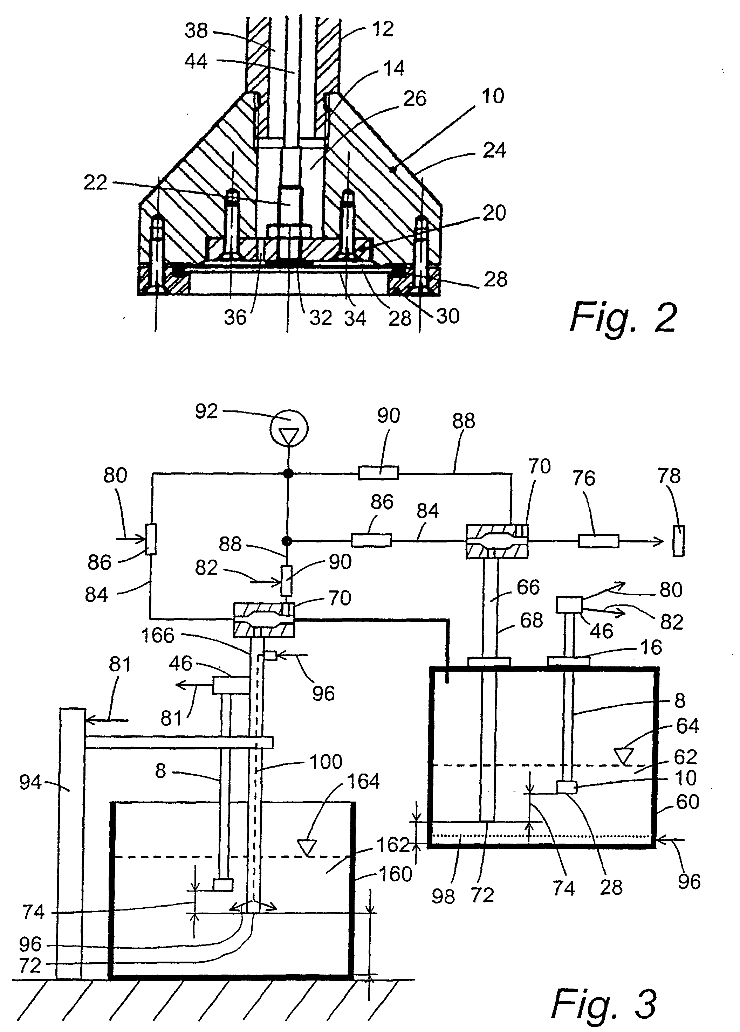

Der Näherungssensor 22 ist über eine elektrische Leitung 44, die mehrere elektrische Leiter enthält, mit einer elektronischen Steuereinrichtung 46 verbunden. Diese versorgt den Näherungssensor 22 mit elektrischem Strom und erhält vom Näherungssensor 22 Informationen in Abhängigkeit des Abstandes, welchen das Metallelement 32 der Membran 28 von ihm hat. Die elektronische Steuereinheit 46 enthält vorzugsweise mindestens einen Mikroprozessor und dient zur Steuerung mindestens eines Gerätes, vorzugsweise einer Pulverfördervorrichtung, wie dies nachstehend mit Bezug auf Fig. 3 beschrieben wird. Die elektronische Steuereinrichtung 46 kann in einer von der Niveausondenvorrichtung 8 getrennten Einrichtung untergebracht sein, oder entsprechend den hier beschriebenen Ausführungsformen in einem Gehäuse 48, welches an dem vom Sondenkopf 10 entfernten, auf der anderen Seite vom Träger 16 gelegenen Endabschnitt des Rohres 12 befestigt ist. Vorzugsweise ist das Gehäuse 48 eine das Rohr 12 koaxial umgebende Büchse, in welcher die Steuereinrichtung 46 untergebracht ist. Dadurch bilden die elektronische Steuereinrichtung 46 mit dem Gehäuse 48, das Rohr 12 und der Sondenkopf 10 mit dem Näherungssensor 22 und der Membran 28 eine Baueinheit, welche mit oder ohne dem Träger 16 und der Befestigungsvorrichtung 18 verwendbar ist.

Gemäß bevorzugter Ausführungsform ist der Näherungssensor 22 als Näherungsschalter ausgebildet, welcher je nach Annäherung des Metallelements 32 umschaltet.

Die elektronische Steuereinrichtung 46 kann optische Anzeigemittel zur optischen Anzeige des Betriebszustandes der Niveausondenvorrichtung 8 enthalten. Beispielsweise kann ein optisches Anzeigemittel 52, zum Beispiel ein Grünlicht, zur Anzeige der elektrischen Stromversorgung des Näherungssensors 22 vorgesehen sein. Ferner kann ein optisches Anzeigemittel 54, z.B. ein Rotlicht, zur Anzeige eines fehlenden oder unter einem vorbestimmten Niveau liegenden Druckes auf der Membranaußenseite 34 vorgesehen sein; auch kann ein optisches Anzeigemittel 56, z.B. ein Gelblicht, zur Anzeige eines kritischen Druckes auf der Membranaußenseite 34 vorgesehen sein. Zusätzlich oder alternativ können auch akustische Anzeigemittel benutzt werden. Die Anzeigemittel können durch ein Schauglas 58 im Gehäuse 48 gegenüber dem Gehäuseäußeren abgeschirmt und dadurch vor Verschmutzung geschützt werden.

Die Membran 28 ist vorzugsweise eine in sich biegsame oder flexible Scheibe. Das Metallelement 32 ist vorzugsweise eine Metallscheibe, deren Durchmesser wesentlich kleiner ist als der Durchmesser der Membran 28, beispielsweise nur ein Sechstel oder weniger so groß wie der Membrandurchmesser.

Damit Flatterbewegungen der Membran 28 keine Steuersignale an der Steuereinrichtung 46 auslösen, enthält die Steuereinrichtung vorzugsweise Verzögerungs- oder Dämpfungsmittel, durch welche Steuersignale nur bei stabileren Membranzuständen erzeugt werden.

Fig. 3 zeigt zwei bevorzugte Verwendungsmöglichkeiten der Niveausondenvorrichtung 8 der Figuren 1 und 2.

Gemäß der einen bevorzugten Verwendung ist die Niveausondenvorrichtung 8 mit ihrem Sondenkopf 10 in einen Pulverbehälter 60 eingetaucht, um darin fluidisiertes Pulver 62 auf einem vorbestimmten Niveau 64 zu halten.

Eine pneumatische Pulverfördervorrichtung 66 enthält ein Saugrohr 68, dessen unteres Ende in das Pulver 62 im Pulverbehälter 60 eingetaucht ist und an dessen oberem Ende eine Pumpe 70 in Form eines Injektors befestigt ist. Das untere Rohrende enthält eine Pulveransaugöffnung 72 in einem vorbestimmten Höhenabstand 74 tiefer (oder höher oder niveauidentisch) angeordnet als die Membran 28 des Sondenkopfes 10. Von dem Pulverbehälter 60 durch den Injektor 70 einer Sprühvorrichtung 76 gefördertes Pulver 62 wird auf ein zu beschichtendes Objekt 78 gesprüht.

Wenn das Pulverniveau 64 auf einen vorbestimmten Wert abfällt, wird von der Steuereinrichtung 46 über schematisch angedeutete Leitungen 80 und 82 eine zweite pneumatische Fördereinrichtung 166 eingeschaltet, damit diese aus einem zweiten Pulverbehälter 160 so lange fluidisiertes Beschichtungspulver 162 in den einen Pulverbehälter 60 fördert, bis in letzterem wieder das gleiche oder ein anderes Niveau 64 erreicht ist. Die Niveausondenvorrichtung 8 im Pulverbehälter 60 dient somit zur Konstanthaltung des Niveaus 64, was ein vorbestimmter Wert oder ein vorbestimmter Wertebereich sein kann. Durch diese Konstanthaltung des Niveaus oder Niveaubereiches 64 unter gleichzeitiger Konstanthaltung des Höhenabstandes 74 der Pulveransaugöffnung 72 von der Membran 28 herrschen an der Pulveransaugöffnung 72 stets gleiche Luft-Pulver-Drücke und damit ist gewährleistet, daß von dem Injektor 70 stets nur eine gewünschte Pulvermenge der Sprühvorrichtung 76 zugeführt wird. Die Förderleistung des Injektors 70 wird im wesentlichen durch Druckluft bestimmt, welche ihm auf einer Förderluftleitung 84 zugeführt wird und durch ein darin enthaltenes Einstellelement 86 einstellbar ist, beispielsweise ein Druckregler, eine Strömungsblende oder ein Ventil. Dem Injektor 70 kann, wie aus dem Stand der Technik bekannt ist, auch Druckluft als Zusatzluft durch eine Zusatzluftleitung 88 zugeführt und durch ein weiteres Einstellelement 90 gesteuert oder geregelt werden, welches gleich oder ähnlich wie das Einstellelement 86 ausgebildet sein kann.

Die zweite Pulverfördervorrichtung 166 kann in gleicher Weise ausgebildet sein, wie dies in Fig. 3 dargestellt und mit den gleichen Bezugszahlen bezeichnet ist. Sie können eine gemeinsame Druckluftquelle 92 haben.

Die zweite Pulverfördervorrichtung 166 kann von einer Hubvorrichtung 94 dem Pulverniveau 164 folgend vertikal bewegbar sein in Abhängigkeit von einer zweiten Niveausondenvorrichtung 8, die an der Hubvorrichtung 94 oder Pulverfördervorrichtung 166 zur gemeinsamen Vertikalbewegung befestigt ist. Die Vertikalbewegung in Abhängigkeit von dem Pulverniveau 164 wird von der Steuereinrichtung 46 dieser Pulverfördervorrichtung 166 gesteuert oder geregelt, was schematisch durch Pfeile 81 stellvertretend für elektrische Leitungen dargestellt ist.

Die Pulveransaugöffnungen 72 dürfen von dem Boden des Behälters 60 bzw. 160 nicht verschlossen werden. Sie müssen deshalb einen Höhenabstand vom Behälterboden haben oder im Saugrohr 68 bzw. 100 seitlich in der Rohrwand gebildet sein.

In beiden Behältern 60 und 160 wird das Pulver 62 bzw. 162 in einem fludisierten Zustand gehalten, indem Fluidisier-Druckluft in bekannter Weise in das Pulver gefördert wird. Die Fluidisier-Druckluft 96 kann beispielsweise durch einen perforierten Zwischenboden 98, wie das schematisch für den Pulverbehälter 60 dargestellt ist, oder durch eine Leitung im oder parallel zum Saugrohr 68 in das Pulver des Behälters geleitet werden, wie letzteres schematisch durch eine gestrichelte Linie 100 für die zweite Pulverfödervorrichtung 166 dargestellt ist.

Die Membran 28 ist vorzugsweise eine dünne Scheibe, die flexibel ist. Sie kann aus elektrisch leitendem Material oder vorzugsweise aus elektrisch nicht-leitendem Material bestehen, insbesondere aus Gummi.

## Patentansprüche

1. Pulverbehälter-Niveausondenvorrichtung (8) für eine Pulver-Sprühbeschichtungseinrichtung (76), **gekennzeichnet durch**, einen induktiven Näherungssensor (22); eine gegenüber dem Näherungssensor angeordnete Membran (28), welche **durch**. Druck von fluidisiertem Pulver auf ihre vom Näherungssensor abgewandte Außenseite (34) relativ zum Näherungssensor in Richtung zu ihm hin- und herbewegbar ist; und ein auf der dem Näherungssensor (22) gegenüberliegenden Seite der Membran angeordnetes, mit ihr zur gemeinsamen Bewegung verbundenes Metallelement (32) aus einem die magnetischen Eigenschaften des Näherungssensors beeinflussenden Metall.

2. Pulverbehälter-Niveausondenvorrichtung nach Anspruch 1, **dadurch gekennzeichnet, daß** die Membran (28) eine an ihrem äußeren Randbereich befestigte Membranscheibe ist und daß das Metallelement (32) eine Metallscheibe ist, die einen wesentlich kleineren Durchmesser als die Membranscheibe hat und in deren Zentrum angeordnet ist.

3. Pulverbehälter-Niveausondenvorrichtung nach Anspruch 1 oder 2, **dadurch gekennzeichnet, daß** das Metallelement (32) an die Membran (28) anvulkanisiert ist.

4. Pulverbehälter-Niveausondenvorrichtung nach einem der vorhergehenden Ansprüche, **dadurch gekennzeichnet, daß** der Näherungssensor (22) ein Näherungsschalter ist.

5. Pulverbehälter-Niveausondenvorrichtung nach einem der vorhergehenden Ansprüche, **dadurch gekennzeichnet, daß** der Näherungssensor (22) und die Membran (28) am einen Ende eines Rohres (12) angeordnet sind, welches in einen Pulverbehälter eintauchbar ist.

6. Pulverbehälter-Niveausondenvorrichtung nach Anspruch 5, **dadurch gekennzeichnet, daß** das Rohr (12) an einem Träger (16) befestigt und relativ zum Träger in Rohrlängsrichtung verstellbar (18) ist.

7. Pulverbehälter-Niveausondenvorrichtung nach Anspruch 5 oder 6, **dadurch gekennzeichnet, daß** die dem Näherungssensor (22) zugewandte Membraninnenseite durch das Rohr (12) hindurch mit der Außenatmosphäre verbunden ist.

8. Pulverbehälter-Niveausondenvorrichtung nach einem der vorhergehenden Ansprüche, **dadurch gekennzeichnet, daß** sie als eine Baueinheit ausgebildet ist, die eine elektronische Steuereinrichtung (46) enthält, welche elektrische Signale des Näherungssensors (22) in elektrische Steuersignale umwandelt zur Steuerung elektrischer Geräte (86, 90, 94) einer pneumatischen Pulverfördereinrichtung (166) in Abhängigkeit von dem Druck von fluidisiertem Pulver in einem Pulverbehälter (60; 160).

9. Pulverbehälter-Niveausondenvorrichtung nach Anspruch 8, **dadurch gekennzeichnet, daß** die Steuereinrichtung mindestens ein Anzeigemittel (52, 54, 56, 58) zur Anzeige von mindestens einem Betriebszustand des Näherungssensors (22) aufweist.

10. Pulverbehälter-Niveausondenvorrichtung nach Anspruch 8 oder 9, **dadurch gekennzeichnet, daß** die Steuereinrichtung (46) elektrische Ansprechverzögerungsmittel enthält, welche Signalschwankungen des Näherungssensors (22), deren Frequenz höher als ein vorbestimmter Grenzwert ist, automatisch unterdrücken, derart, daß diese nicht zu einer Änderung der elektrischen Steuersignale der Steuereinrichtung führen.

11. Pulverbehälter-Niveausondenvorrichtung nach einem der Ansprüche 8 bis 10 in Kombination mit einem der Ansprüche 5 bis 7, **dadurch gekennzeichnet, daß** die elektrische Steuereinrichtung (46) an dem von dem Näherungssensor (22) entfernten Ende des Rohres (12) angeordnet und am Rohr befestigt ist.

12. Pulverbehälter-Niveausondenvorrichtung nach einem der vorhergehenden Ansprüche, **dadurch gekennzeichnet, daß** die Membran (28) aus elektrisch nicht-leitendem Material besteht.

## Claims

1. Level-sensing probe (2) in a powder container for a powder spray-coating installation (76), **characterised by** an inductive proximity sensor (22), a membrane (28) arranged opposite the proximity sensor which due to pressure from fluidised powder on its outer side (34) facing away from the proximity sensor is movable relative to the proximity sensor in a direction towards and away from it and a metal element (32) arranged on the side of the membrane located opposite the proximity sensor (22) and connected to it for joint movement, which clement is composed of a metal influencing the magnetic properties of the proximity sensor.

2. Level-sensing probe in a powder container according to Claim 1, **characterised in that** the membrane (28) is a membrane disk fastened at its outer peripheral region and that the metal element (32) is a metal disk having a substantially smaller diameter than the membrane disk and is arranged in the centre thereof.

3. Level-sensing probe in a powder container according to Claim 1 or 2, **characterised in that** the metal element (32) is vulcanised onto the membrane (28).

4. Level-sensing probe in a powder container according to any of the preceding claims, **characterised in that** the proximity sensor (22) is a proximity switch.

5. Level-sensing probe in a powder container according to any of the preceding claims, **characterised in that** the proximity sensor (22) and the membrane (28) are arranged on one end of a tube (12) which is immersable into a powder container.

6. Level-sensing probe in a powder container according to Claim 5, **characterised in that** the tube (12) is fastened to a support (16) and is adjustable relative to the support in the longitudinal direction of the tube.

7. Level-sensing probe in a powder container according to Claim 5 or 6, **characterised in that** the inner side of the membrane facing towards the proximity sensor (22) is connected through the tube (12) to the outside atmosphere.

8. Level-sensing probe in a powder container according to any of the preceding claims, **characterised in that** it is constructed as a structural unit containing an electronic control device (46) which converts electric signals from the proximity sensor (22) into electric control signals to control electric devices (86, 90, 94) of a pneumatic powder conveying device (166) as a function of the pressure from fluidised powder in a powder container (60; 160).

9. Level-sensing probe in a powder container according to Claim 8, **characterised in that** the control device possesses at least one display means (52, 54, 56, 58) for displaying at least one operating state of the proximity sensor (22).

10. Level-sensing probe in a powder container according to Claim 8 or 9, **characterised in that** the control device (46) contains electric response-delay means which automatically suppress signal fluctuations of the proximity sensor (22) whose frequency is higher than a predetermined threshold value in such a way that these do not result in a change in the electric control signals of the control device.

11. Level-sensing probe in a powder container according to any of Claims 8 to 10 in combination with any of Claims 5 to 7, **characterised in that** the electric control device (46) is arranged on the end of the tube (12) remote from the proximity sensor (22) and is fastened to the tube.

12. Level-sensing probe in a powder container according to any of the preceding claims, **characterised in that** the membrane (28) is composed of electrically non-conducting material.

## Revendications

1. Sonde de niveau pour récipient à poudre (8) pour un dispositif de revêtement par projection de poudre (76), **caractérisée par** un détecteur de proximité inductif (22), une membrane (28) placée en face de ce détecteur de proximité et qui peut, par pression de poudre fluidifiée sur sa face extérieure (34) opposée au détecteur de proximité, aller et venir par rapport à celui-ci en direction de celui-ci, et un élément métallique (32) placé sur le côté de la membrane faisant face au détecteur de proximité, joint à ce côté pour un mouvement commun et constitué d'un métal qui influe sur les propriétés magnétiques du détecteur de proximité.

2. Sonde de niveau pour récipient à poudre selon la revendication 1, **caractérisée par le fait que** la membrane (28) est un disque membrane fixé dans sa zone de bord extérieure et que l'élément métallique (32) est un disque métallique qui a un sensiblement plus petit diamètre que le disque membrane et est placé au centre de ce dernier.

3. Sonde de niveau pour récipient à poudre selon l'une des revendications 1 et 2, **caractérisée par le fait que** l'élément métallique (32) est fixé par vulcanisation à la membrane (28).

4. Sonde de niveau pour récipient à poudre selon l'une des revendications précédentes, **caractérisée par le fait que** le détecteur de proximité (22) est un interrupteur de proximité.

5. Sonde de niveau pour récipient à poudre selon l'une des revendications précédentes, **caractérisée par le fait que** le détecteur de proximité (22) et la membrane (28) sont placés à une extrémité d'un tube (12) qui peut être plongé dans un récipient à poudre.

6. Sonde de niveau pour récipient à poudre selon la revendication 5, **caractérisée par le fait que** le tube (12) est fixé à un support (16) et est mobile (18) par rapport à ce support dans sa direction longitudinale.

7. Sonde de niveau pour récipient à poudre selon l'une des revendications 5 et 6, **caractérisée par le fait que** le côté intérieur de la membrane dirigé vers le détecteur de proximité (22) communique à travers le tube (12) avec l'atmosphère extérieure.

8. Sonde de niveau pour récipient à poudre selon l'une des revendications précédentes, **caractérisée par le fait qu'**elle est réalisée sous la forme d'un ensemble qui contient un dispositif électronique de commande (46) qui transforme les signaux électriques du détecteur de proximité (22) en signaux électriques pour la commande d'appareils électriques (86, 90, 94) d'un dispositif pneumatique de transport de poudre (166) en fonction de la pression, dans un récipient à poudre (60 ; 160), de poudre fluidifiée.

9. Sonde de niveau pour récipient à poudre selon la revendication 8, **caractérisée par le fait que** le dispositif de commande présente au moins un dispositif indicateur (52, 54, 56, 58) pour l'indication d'au moins un état de fonctionnement du détecteur de proximité (22).

10. Sonde de niveau pour récipient à poudre selon l'une des revendications 8 et 9, **caractérisée par le fait que** le dispositif de commande (46) contient des moyens électriques de retardement de fonctionnement qui suppriment automatiquement les variations de signal du détecteur de proximité (22) dont la fréquence est supérieure à une valeur limite déterminée, de façon telle que celles-ci ne conduisent pas à un changement des signaux électriques de commande du dispositif de commande.

11. Sonde de niveau pour récipient à poudre selon l'une des revendications 8 à 10 en combinaison avec une des revendications 5 à 7, **caractérisée par le fait que** le dispositif électrique de commande (46) est placé à l'extrémité du tube (12) éloignée du détecteur de proximité (22) et fixé à ce tube.

12. Sonde de niveau pour récipient à poudre selon l'une des revendications précédentes, **caractérisée par le fait que** la membrane (28) est en matière non conductrice de l'électricité.
